# EUROPEAN PATENT SPECIFICATION

(11) **EP 1 654 833 B1**
(45) Date of publication and mention of the grant of the patent: **21.11.2012**
(21) Application number: 04766406.5
(22) Date of filing: 03.08.2004
(51) Int. Cl.: H04L 12/26

(54) **ARRANGEMENT AND METHOD FOR CONNECTING A PROCESSING NODE IN A DISTRIBUTED SYSTEM**
ANORDNUNG UND VERFAHREN ZUM VERBINDEN EINES VERARBEITUNGSKNOTENS IN EINEM VERTEILTEN SYSTEM
SYSTEME ET PROCEDE DE CONNEXION D'UN NOEUD DE TRAITEMENT DANS UN SYSTEME REPARTI

(30) Priority: 05.08.2003 GB 0318256
(43) Date of publication of application: 10.05.2006
(73) Proprietor: FREESCALE SEMICONDUCTORS, INC., Austin, Texas 78735 (US)
(72) Inventor: TEMPLE, Christopher P, D-81825 Munich (DE)
(74) Representative: Ferro, Frodo Nunes
(86) International application number: PCT/EP2004/051700
(87) International publication number: WO 2005/015833

(56) References cited:
- US-A- 5 568 615
- US-A- 5 636 204
- US-A1- 2002 133 756

## Description

### Field of the Invention

This invention relates to distributed systems and particularly (thoughy not exclusively) to hard real-time systems using static TDMA (Time Division Multiple Access) based medium arbitration that should remain operational even if subjected to the arbitrary failure of a single processing node.

### Background of the Invention

In the field of this invention it is known that in a distributed processing system having a plurality of processing nodes, while a processing node can fail in an arbitrary way, it is necessary to assure that a single faulty fail-uncontrolled processing node does not disrupt communication among fault-free processing nodes. A fail-uncontrolled processing node may fail in an arbitrary way by sending random messages at unspecified points in time in violation of any given network arbitration scheme. In order to achieve this objective it is known to use either
(a) a fully connected network topology, or
(b) a multi-drop transmission line topology, or
(c) a star topology containing an intelligent central distribution unit, or
(d) a multi-access typology with an 'anti-jabbering' unit in the form of a bus guardian at the outgoing network interface of each processing node.

US 5,568,615 relates to a so-called stealth interface front end communication system. The interface couples a number of actively redundant process control computers to a computer network. Each actively redundant process control compute comprises a stealth interface that includes a multi-ported memory for storing dynamic data associated with a physical process and for transferring data to a front end computer capable of communicating with the computer network.

US Patent Publication No. US 2002/0133756 discloses a system and method of providing multiple levels of fault protection in a data communications network. Fault protection criteria for each of a plurality of resources in the network is stored in each of the plurality of nodes of the network.

However, these approaches have the disadvantages that:
(a) a fully connected network topology involves high cost, and an unfeasible network structure;
(b) a multi-drop transmission line topology requires a receiver for every multi-drop transmission channel;
(c) a star topology containing an intelligent central distribution unit requires high complexity in the distribution unit, increasing susceptibility to faults;
(d) in a multi-access topology with an 'anti-jabbering' unit in the form of a bus guardian at the outgoing network interface of each processing node, the bus guardian is susceptible to spatial proximity faults, and potential functional dependency between the bus guardian and the communication unit within the processing node.

A need therefore exists for a scheme for interconnecting processing nodes in a distributed system wherein the abovementioned disadvantages may be alleviated.

### Statement of Invention

In accordance with a first aspect of the present invention there is provided an arrangement for connecting a processing node in a distributed system as claimed in claim 1.

This provides the advantage of transferring the problem of fault containment from the output interface of a potentially faulty processing node to the input interface of fault-free processing nodes. By doing so, problems encountered by spatial proximity faults or functional dependencies within a faulty processing node that may jeopardize fault containment at its output interface are mitigated.

In accordance with a second aspect of the present invention there is provided a method of operating a processing node in a distributed system as claimed in claim 11.

### Brief Description of the Drawings

Various methods and arrangements for interconnecting fail-uncontrolled processing nodes in a dependable distributed system incorporating the present invention will now be described, by way of example only, with reference to the accompanying drawings, in which:
FIG. 1 shows a block schematic illustration of a known bus guardian based distributed processing system according to a first embodiment;
FIG. 2 shows a block schematic illustration of a node guardian arrangement which may be used in the present invention;
FIG. 3 shows a block schematic illustration of a distributed processing system developed from the bus guardian based system of FIG. 1 and utilising the node guardian arrangement of FIG. 2;
FIG. 4 shows a block schematic illustration of an improved version of the distributed processing system of FIG. 3 for making use of dual channel capabilities;
FIG. 5 shows a block schematic illustration of a distributed processing system containing four central processing nodes, demonstrating how the node guardian approach of FIG. 4 scales to a larger system;
FIG. 6 shows a block schematic illustration of a node guardian arrangement which may be used in the present invention according to a second embodiment;
FIG. 7 shows a block schematic illustration of a distributed processing system utilising the node guardian arrangement of FIG.6.

### Description of Preferred Embodiments

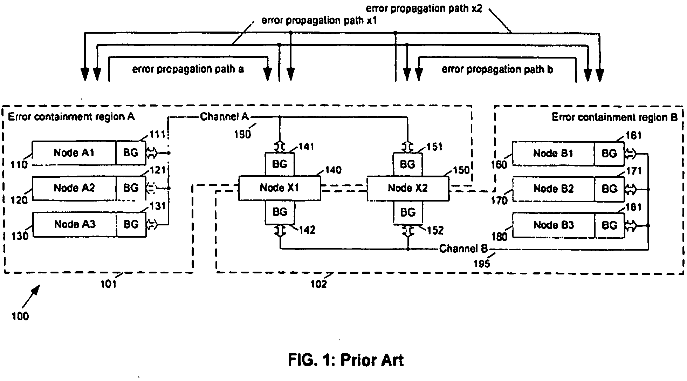

Referring firstly to FIG. 1, a known bus guardian based distributed processing TTP/C™ (Time Triggered Protocol class C) network system 100 includes processing nodes 110, 120, 130, 140, 150, 160, 170, 180; each of the processing nodes has a bus guardian BG 111, 121, 131, 141, 142, 151, 152, 161, 171, 181. The processing nodes 110, 120 and 130 are coupled via a common channel 190 to the processing nodes 140 and 150, and constitute an error containment region 101. The processing nodes 160, 170 and 180 are coupled via a common channel 195 to the processing nodes 140 and 150, and constitute an error containment region 102. 'Babbling idiot' faults (when a faulty processing node continually broadcasts a message, which takes over the bus) occurring in processing nodes 110, 120 or 130 act on 140 and 150 (depicted by fault propagation path a) but not on processing nodes 160, 170 and 180, while faults occurring in processing nodes 160, 170 or 180 act on 140 and 150 (depicted by fault propagation path b) but not on processing nodes 110, 120 and 130. Faults in 140 or 150 (fault propagation path xl and x2), however, act on both error containment regions, i.e., processing nodes 110, 120, 130, 160, 170 and 180 including processing nodes 140 and 150.

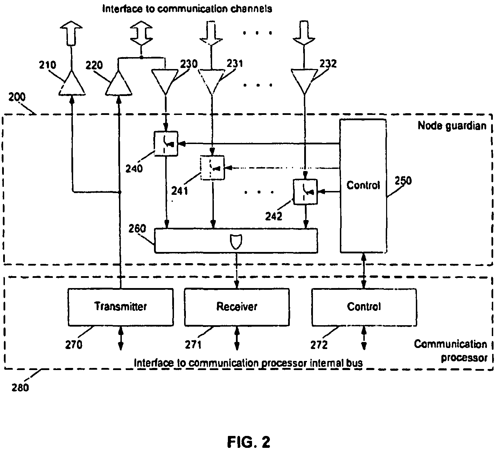

The invention allows the problem of protecting a processing node in a distributed system against 'babbling idiot' failures to be solved by equipping each processing node with a 'node guardian'. The structure of such a node guardian is shown in FIG. 2.

The node guardian 200 consists of a set of switches (FIG. 2 shows an example of three, namely: 240, 241, 242) that connect input signals received from different subnetworks through a set of bus drivers 230, 231, 232 to a receiver 271 of the communication processor 280 via a logical-OR operation 260 and a control unit 250 that interoperates with the communication processor 280 via a control unit 272 and controls the state of each respective switch 240, 241, 242. It will be appreciated that input switches 240, 241, 242 combined with a logic element 260 act as an in input multiplexer under the control of the control unit 250. Connection of the communication processor 280 to the different subnetworks via the node guardian 200 can occur either as a dedicated transmitter for the subnetwork as demonstrated in the case of bus driver 210, or as a combined transmitter and receiver for the subnetwork as demonstrated in the case of bus drivers 220 and 230, or as a dedicated receiver for the subnetwork as demonstrated in the case of bus drivers 231 and 232.

It will be understood that control units 272 and 250 are only separated to demonstrate conformance to the known FlexRay™ architecture, and may otherwise be commonly provided.

The node guardian 200 protects the receiver 271 of the communication processor against subnetworks that are blocked by jabbering processing nodes by enabling and disabling the respective switches according to a TDMA schedule (which will be understood and need not be described in further detail) based on the knowledge of the assignment of the transmission slots to the respective subnetworks. By following the TDMA schedule the node guardian 200 can enable and disable the reception path between one of the respective subnetworks 230, 231 and 232 and the receiver 271 of the associated communication processor 280 prior to the actual transmission of a message on a particular subnetwork.

In contrast to a bus guardian that implements an output protection boundary where protection occurs within the sphere of the faulty processing node the node guardian 200 implements an input protection boundary where protection occurs within the sphere of the fault-free processing node. This eliminates the risk of spatial proximity faults that in the case of the bus guardian could cause both the bus guardian and the associated communication processor to fail in a malign way resulting in jabbering, in particular, if both share mutual and potentially faulty resources such as clock or power supply. In the case of the node guardian the node guardian 200 and the communication processor 280 may share resources such as the clock oscillator or the power supply. without putting the protection of other node guardian protected processing nodes at risk.

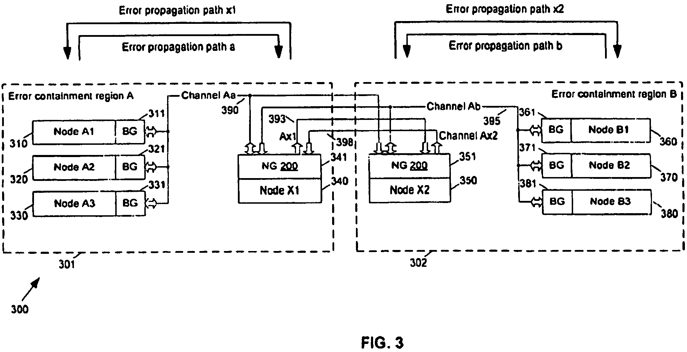

FIG. 3 shows an example of a hierarchical distributed processing network system system developed from the purely bus guardian based system of FIG. 1 and utilising the bus guardian arrangement 200 of FIG. 2. In the system 300 of FIG. 3, processing nodes 310, 320, 330, 360, 370 and 380 implement the bus guardian approach as in the system of FIG. 1, while two processing nodes 340 and 350 each incorporate the arrangement 200 of FIG. 2 in 341 and 351 and are based on the node guardian approach. The processing nodes 310, 320 and 330 are coupled via a common channel 390 to the processing node 340 and constitute error containment region 301, and are also coupled via the channel 390 to the processing node 350. The processing nodes 360, 370 and 380 are coupled via a common channel 395 to the processing node 350 and constitute an error containment region 302, and are also coupled via the channel 395 to the processing node 340. The processing node 340 is coupled to the processing node 350 via a unidirectional path 393, and the processing node 350 is coupled to the processing node 340 via a unidirectional path 398. Path 393 enables processing node 340 to communicate with processing node 350 even if a jabbering fault in processing node 310, 320 or 330 has penetrated past the respective bus guardian 311, 312 or 313 and blocked channel 390. Path 398 serves in a corresponding way for processing node 350. In the system of FIG. 3, a fault occurring in error containment region 301 (i.e., processing nodes 310, 320, 330 or 340) is confined to region 301 (fault propagation path a and x1) and cannot impact the processing nodes in error containment region 302. The same holds true *vice versa* for faults originating in error containment region 302. Hence, a clear concept of confinement is implemented at the system level.

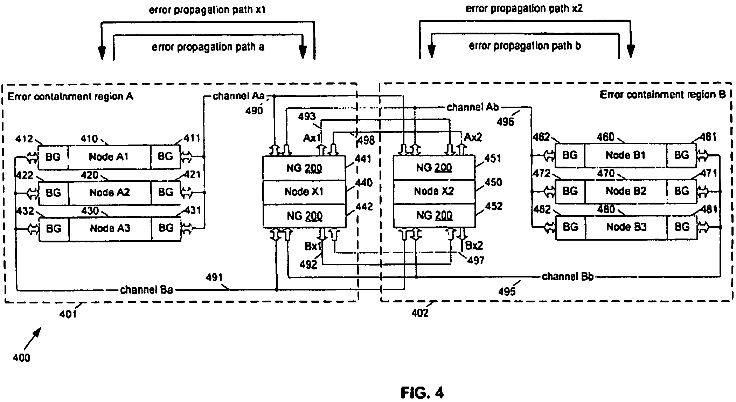

FIG. 4 shows an improved version of the example shown in FIG. 3 that makes use of the dual channel capabilities provided in particular by FlexRay™. Additionally to the system of FIG. 3, in the system 400 of FIG. 4 the processing nodes 410, 420 and 430 are coupled to the processing nodes 440 and 450 via a common channel 491, and the processing nodes 460, 470 and 480 are coupled to the processing nodes 440 and 450 via a common channel 495; the processing node 440 is coupled to the processing node 450 via path 492, and the processing node 450 is coupled to the processing node 440 via path 497. In the system of FIG. 4, it is possible to tolerate transient and one permanent channel failure in either fault containment region. In case of a failure of channel 490, for example, the processing nodes 410, 420, 430 and 440 can still communicate via channel 491. The same holds true *vice versa* for a channel failure in fault containment region 402.

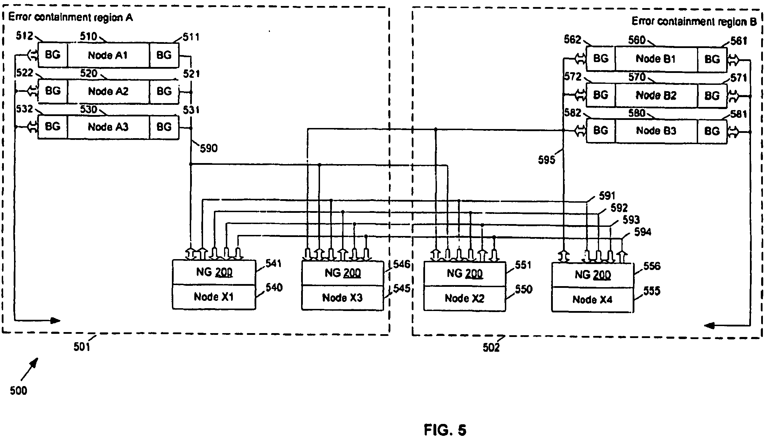

FIG. 5 shows how the node guardian approach (as shown, for example, in FIG. 3) scales to a large system containing four central processing nodes 540, 545, 550, 555 each having a node guardian arrangement 200 for each channel (the figure only being completed for one channel). In the system 500 of FIG. 5, as can be seen by comparison with FIG. 3, two further central processing nodes 545 and 555 have been added to the processing nodes 540 and 550, the processing nodes 545 and 555 being provided in error containment regions 501 and 502 respectively, the processing nodes 510, 520, 530 being coupled directly to central processing nodes 540, 545 and 550, the processing nodes 560, 570, 580 being coupled directly to central processing nodes 540, 545 and 555, and the processing nodes 540, 545, 550, 555 being cross-coupled via unidirectional paths. The cross-coupling enables processing nodes 540, 545, 550 and 555 to maintain communication even if, for example, the channel connecting 510, 520 and 530 with 540, 545 and 550 fails. The arrangement of the four central processing nodes 540, 545, 550, 555 each having a node guardian arrangement 200 and each being crosscoupled by a unidirectional path 591, 592, 593, 594 provides means for starting TDMA based communication among these four central processing nodes system even under the assumption of a general asymmetric communication fault, which is also known as Byzantine fault, as the two conditions necessary for mitigating such a fault are fulfilled. The first condition demands the provision of 3k+1 processing nodes to mitigate k Byzantine faults. For k equal 1 the condition is met with 4 processing nodes. The second condition demands the ability to exchange k+1 rounds of communication among the fault-free processing nodes. For k equal 1 this condition implies the ability to exchange 2 rounds of communication. By providing each central processing node with an exclusive unidirectional broadcast path to the other central processing nodes 2 rounds of communication can be ensured among the central processing nodes even under the assumption of any single faulty central processing node.

In the general case the arrangement with four central processing nodes 540, 545, 550, 555 each having a node guardian arrangement 200 and each being crosscoupled by a unidirectional path 591, 592, 593, 594 can be used to define a system with four error containment regions whereby each of the four central processing nodes would be located in a single one of the four error containment regions.

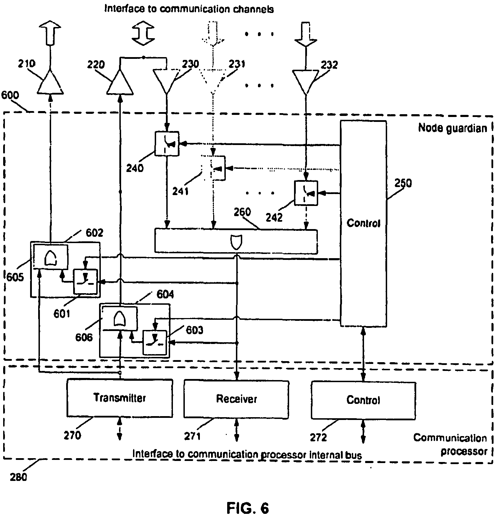

An alternative embodiment of a node guardian is shown in FIG. 6 in which the same reference numerals are used for the same elements as those for the node guardian shown in FIG. 2.

The node guardian 600 differs to that of the node guardian 200 shown in FIG. 2 by the inclusion of a logic element 602, which includes an OR gate 605 and a switch 601. The logic element 602 is placed in the transmit path of the node guardian 600 coupled between the transmitter 270 and the bus driver 210. An output from the transmitter forms one input to the OR gate 605 and the output from the switch 601 forms a second input (i.e. a signal received by the node guardian). Additionally, or alternatively, in an equivalent way a logic element 604, which includes an OR gate 606 and a switch 603, is placed in the transmit path of the node guardian 600 coupled between the transmitter 270 and the bus driver 220. An output from the transmitter forms one input to the logic element 604 and the output from the switch 603, forms a second input.

The operation of the switches 601 and 603 are controlled via the control unit 250 such that when a signal is received by the node guardian 600, which is to be transferred to another node (not shown), the control unit 250 operates one or both switches 601, 603 to allow the received signal to be communicated to the corresponding OR-gate 605,606, which acts as a multiplexer for transmitting the received signal via the bus drivers 210 and/or 220.

The node guardian 600 embodiment shown in FIG. 6 allows a node in a error containment region, for example error containment region 301, to broadcast a message directly to a node in another error containment region, for example error containment region 302, without the need for a processing node (e.g. communication processor), coupled to the node guardian to have to actively relay the message on to the other error containment region.

This provides the advantage of reducing message latency and computational requirements.

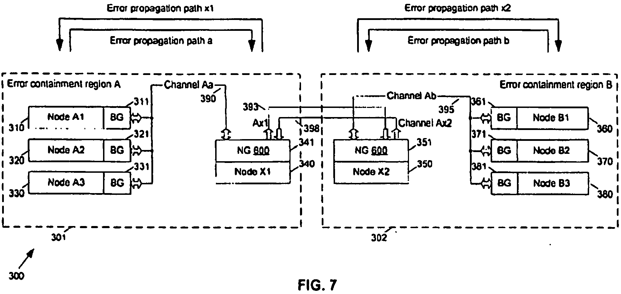

Additionally, the node guardian 600 embodiment shown in FIG. 6 avoids the need for the alternative embodiment of coupling error containment region 301 to error containment region 302 by the use of extra tracking, as shown in FIG. 3. Consequently, by allowing the node guardian 341 to protect against a jabbering fault within error containment region 301 messages can be conveyed via the node guardian 341 to node guardian 350 and vice versa. The corresponding network configuration incorporating node guardian 600 is shown in FIG. 7, in which the same reference numberals are used for the same elements as those shown in FIG. 3.

It will be appreciated that a key benefit of the node guardian approach is that the error containment boundary is defined within the reception path of the processing node. This stands in contrast to the bus guardian approach where the error containment boundary is defined within the transmission path of the processing node where it can be impacted by common failure modes or spatial proximity faults that may cause both a faulty behaviour of the communication processor resulting in an unscheduled transmission as well as a faulty behaviour of the bus guardian allowing the unscheduled transmission to propagate to the network. The node guardian approach eliminates many problems encountered with the bus guardian approach concerning avoiding common failure modes, such as independent clock sourcing, independent power supply, testing and test interaction.

It will be understood that the method and arrangement for interconnecting fail-uncontrolled processors in a dependable distributed system described above provides the following advantages:

The invention transfers the problem of fault containment from the output interface of a potentially faulty processing node to the input interface of fault-free processing nodes. By doing so, problems encountered by spatial proximity faults or functional dependencies within a faulty processing node that may jeopardize fault containment at its output interface are mitigated.

## Claims

1. An arrangement for connecting a processing node in a distributed system containing fail-uncontrolled processing nodes, the arrangement comprising:
receiver means for receiving signals from another processing node of the system, and
a node guardian coupled to the receiver means wherein the node guardian includes switch means for receiving a plurality of unidirectional input signals,
logic means coupled to the switch means for combining the plurality of received input signals according to a predetermined logic function, and
control means coupled to the switch means for controlling application of the plurality of received signals to the logic means for controlling reception of signals thereat so as to reduce reception by the processing node of uncontrolled transmission from another processing node of the system.

2. The arrangement of claim 1 wherein the predetermined logic function comprises an OR logic function.

3. The arrangement of claim 1 or 2 wherein the control means is arranged to control the switch means according to a predetermined TDMA schedule.

4. A distributed system comprising the arrangement according to claim 1, 2, or 3.

5. The system of claim 4 further comprising at least one processing node having a bus guardian.

6. The system of claim 5 comprising:
a first processing node having a node guardian according to claim 1, 2, or 3,
a second processing node having a node guardian according to claim 1, 2, or 3,
a first group of processing nodes having a bus guardian, and
a second group of processing nodes having a bus guardian,
wherein the first group is coupled to the first and second processing nodes via a first common channel, and the second group is coupled to the first and second processing nodes via a second common channel,
the first group and the first processing node forming a first error containment region, and the second group and the second processing node forming a second error containment region.

7. The system of claim 6, the first group further being coupled to the first and second processing nodes via a third common channel, and the second group further being coupled to the first and second processing nodes via a fourth common channel.

8. The system of claim 5 or 6 further comprising:
a third processing node having a node guardian according to claim 1, 2, or 3, and
a fourth processing node having a node guardian according to claim 1, 2, or 3,
wherein the third processing node is coupled to the first common channel, the fourth processing node is coupled to the second common channel, and the first, second, third and fourth processing nodes are cross-coupled,
the third processing node being in the first error containment region, and the fourth processing node being in the second error containment region.

9. A system of claim 4 comprising a plurality of processing nodes each having a node guardian according to claim 1, 2 or 3 coupled by unidirectional broadcast paths, wherein each of the plurality of processing nodes is assigned exclusively to one of the unidirectional broadcast paths for the purpose of transmission between the plurality of processing nodes.

10. The system of any one of claims 5-9 wherein the system is one of A-B:
A a TTP/C system,
B a FlexRay™ system.

11. A method of operating a processing node in a fail-uncontrolled distributed system, the method comprising:
providing receiver means for receiving signals from another processing node of the system, and
providing a node guardian coupled to the receiver means for receiving a plurality of unidirectional input signals, wherein the node guardian includes
logic means for combining the plurality of received input signals according to a predetermined logic function, and
control means for controlling application of the plurality of received signals to the logic means for controlling reception of signals thereat so as to reduce reception by the processing node of uncontrolled transmission from another processing node of the system.

12. The method of claim 11 wherein the predetermined logic function comprises an OR logic function.

13. The processing node of claim 11 or 12 wherein the control means controls the switch means according to a predetermined TDMA schedule.

14. A method of operating a distributed system comprising the method of operating a processing node according to claim 11, 12, or 13.

15. The method of claim 14 further comprising providing at least one processing node having a bus guardian.

16. The method of claim 15 comprising:
operating a first processing node having a node guardian according to claim 11, 12, or 13,
operating a second processing node having a node guardian according to claim 11, 12, or 13,
providing a first group of processing nodes having a bus guardian, and
providing a second group of processing nodes having
a bus guardian,
wherein the first group is coupled to the first and second processing nodes via a first common channel, and the second group is coupled to the first and second processing nodes via a second common channel,
the first group and the first processing node forming a first error containment region, and the second group and the second processing node forming a second error containment region.

17. The method of claim 16, the first group further being coupled to the first and second processing nodes via a third common channel, and the second group further being coupled to the first and second processing nodes via a fourth common channel.

18. The method of claim 15 or 16 further comprising:
operating a third processing node having a node
guardian according to claim 11, 12, or 13, and
operating a fourth processing node having a node
guardian according to claim 11, 12, or 13,
wherein the third processing node is coupled to the first common channel, the fourth processing node is coupled to the second common channel, and the first, second, third and fourth processing nodes are cross-coupled,
the third processing node being in the first error containment region, and the fourth processing node being in the second error containment region.

19. The method of any one of claims 15-18 wherein the system is one of A-B:
A a TTP system,
B a FlexRay™ system.

## Patentansprüche

1. Anordnung zum Verbinden eines Verarbeitungsknotens in einem verteilten System, das nicht ausfallsicher gesteuerte Verarbeitungsknoten enthält, wobei die Anordnung umfasst:
Empfängermittel zum Empfangen von Signalen von einem anderen Verarbeitungsknoten des Systems, und
ein Knotenschutz, der an die Empfängermittel gekoppelt ist, wobei der Knotenschutz Schaltermittel zum Empfangen einer Vielzahl von unidirektionalen Eingangssignalen umfasst,
Logikmittel, die zum Kombinieren der Vielzahl von empfangenen Eingangssignalen gemäß einer vorbestimmten Logikfunktion an die Schaltmittel gekoppelt sind, und
Steuermittel, die an die Schaltmittel gekoppelt sind, zum Steuern einer Anwendung der Vielzahl von empfangenen Signale auf die Logikmittel zum Steuern eines Empfangs von Signalen daselbst, um einen Empfang einer ungesteuerten Übertragung von einem anderen Verarbeitungsknoten des Systems durch den Verarbeitungsknoten zu verringern.

2. Anordnung gemäß Anspruch 1, wobei die vorbestimmte Logikfunktion eine OR-Logikfunktion umfasst.

3. Anordnung gemäß Anspruch 1 oder 2, wobei die Steuermittel angeordnet sind, um die Schaltmittel gemäß einem vorbestimmten TDMA-Zeitplan zu steuern.

4. Verteiltes System, das die Anordnung gemäß Anspruch 1, 2 oder 3 umfasst.

5. System gemäß Anspruch 4, das weiterhin umfasst: mindestens einen Verarbeitungsknoten, der über einen Busschutz verfügt.

6. System gemäß Anspruch 5, das umfasst:
einen ersten Verarbeitungsknoten, der über einen Knotenschutz gemäß Anspruch 1, 2 oder 3 verfügt,
einen zweiten Verarbeitungsknoten, der über einen Knotenschutz gemäß Anspruch 1, 2 oder 3 verfügt,
eine erste Gruppe von Verarbeitungsknoten, die über einen Busschutz verfügen, und
eine zweite Gruppe von Verarbeitungsknoten, die über einen Busschutz verfügen,
wobei die erste Gruppe über einen ersten gemeinsamen Kanal an den ersten und zweiten Verarbeitungsknoten gekoppelt ist und die zweite Gruppe über einen zweiten gemeinsamen Kanal an den ersten und zweiten Verarbeitungsknoten gekoppelt ist, wobei die erste Gruppe und der erste Verarbeitungsknoten eine erste Fehlereingrenzungsregion bilden und die zweite Gruppe und der zweite Verarbeitungsknoten eine zweite Fehlereingrenzungsregion bilden.

7. System gemäß Anspruch 6, wobei die erste Gruppe weiterhin über einen dritten gemeinsamen Kanal an den ersten und zweiten Verarbeitungsknoten gekoppelt ist und die zweite Gruppe weiterhin über einen vierten gemeinsamen Kanal an den ersten und zweiten Verarbeitungsknoten gekoppelt ist.

8. System gemäß Anspruch 5 oder 6, das weiterhin umfasst:
einen dritten Verarbeitungsknoten, der über einen Knotenschutz gemäß Anspruch 1, 2 oder 3 verfügt, und
einen vierten Verarbeitungsknoten, der über einen Knotenschutz gemäß Anspruch 1, 2 oder 3 verfügt,
wobei der dritte Verarbeitungsknoten an den ersten gemeinsamen Kanal gekoppelt ist, der vierte Verarbeitungsknoten an den zweiten gemeinsamen Kanal gekoppelt ist und der erste, zweite, dritte und vierte Verarbeitungsknoten kreuzgekoppelt sind, wobei der dritte Verarbeitungsknoten in der ersten Fehlereingrenzungsregion und der vierte Verarbeitungsknoten in der zweiten Fehlereingrenzungsregion liegt.

9. System gemäß Anspruch 4, das umfasst: eine Vielzahl von Verarbeitungsknoten, wobei jeder über einen Knotenschutz gemäß Anspruch 1, 2 oder 3 verfügt, die über unidirektionale Rundfunkpfade gekoppelt sind, wobei jeder aus der Vielzahl von Verarbeitungsknoten, zum Zweck einer Übertragung zwischen der Vielzahl von Verarbeitungsknoten, ausschließlich einem der unidirektionalen Rundfunkpfade zugewiesen ist.

10. System gemäß einem der Ansprüche 5 - 9, wobei das System entweder A oder B ist:
| | |
|---|---|
| A | ein TTP/C-System, |
| B | ein FlexRay™-System. |

11. Verfahren eines Betreibens eines Verarbeitungsknotens in einem nicht ausfallsicher gesteuerten verteilten System, wobei das Verfahren umfasst:
Bereitstellen von Empfängermitteln zum Empfangen von Signalen von einem anderen Verarbeitungsknoten des Systems, und
Bereitstellen von einem Knotenschutz, der an die Empfängermittel zum Empfangen einer Vielzahl von unidirektionalen Eingangssignalen gekoppelt ist, wobei der Knotenschutz umfasst:
Logikmittel zum Kombinieren der Vielzahl von empfangenen Eingangssignalen gemäß einer vorbestimmten Logikfunktion, und
Steuermittel zum Steuern einer Anwendung der Vielzahl von empfangenen Signalen auf das Logikmittel zum Steuern eines Empfangs von Signalen daselbst, um einen Empfang einer ungesteuerten Übertragung von einem anderen Verarbeitungsknoten des Systems durch den Verarbeitungsknoten zu verringern.

12. Verfahren gemäß Anspruch 11, wobei die vorbestimmte Logikfunktion eine ODER-Logikfunktion umfasst.

13. Verarbeitungsknoten gemäß Anspruch 11 oder 12, wobei die Steuermittel die Schaltmittel gemäß einem vorbestimmten TDMA-Zeitplan steuern.

14. Verfahren eines Betreibens eines verteilten Systems, das umfasst: Verfahren eines Betreibens eines Verarbeitungsknotens gemäß Anspruch 11, 12 oder 13.

15. Verfahren gemäß Anspruch 14, das weiterhin umfasst: Bereitstellen mindestens eines Verarbeitungsknotens, der über einen Busschutz verfügt.

16. Verfahren gemäß Anspruch 15, das umfasst:
Betreiben eines ersten Verarbeitungsknotens, der über einen Knotenschutz gemäß Anspruch 11, 12 oder 13 verfügt,
Betreiben eines zweiten Verarbeitungsknotens, der über einen Knotenschutz gemäß Anspruch 11, 12 oder 13 verfügt,
Bereitstellen einer ersten Gruppe von Verarbeitungsknoten, die über einen Busschutz verfügen, und
Bereitstellen einer zweiten Gruppe von Verarbeitungsknoten, die über einen Busschutz verfügen,
wobei die erste Gruppe über einen ersten gemeinsamen Kanal an den ersten und zweiten Verarbeitungsknoten gekoppelt ist und die zweite Gruppe über einen zweiten gemeinsamen Kanal an den ersten und zweiten Verarbeitungsknoten gekoppelt ist, wobei die erste Gruppe und der erste Verarbeitungsknoten eine erste Fehlereingrenzungsregion bilden und die zweite Gruppe und der zweite Verarbeitungsknoten eine zweite Fehlereingrenzungsregion bilden.

17. Verfahren gemäß Anspruch 16, wobei die erste Gruppe weiterhin über einen dritten gemeinsamen Kanal an den ersten und zweiten Verarbeitungsknoten gekoppelt ist und die zweite Gruppe weiterhin über einen vierten gemeinsamen Kanal an den ersten und zweiten Verarbeitungsknoten gekoppelt ist.

18. Verfahren gemäß Anspruch 15 oder 16, das weiterhin umfasst:
Betreiben eines dritten Verarbeitungsknotens, der über einen Knotenschutz gemäß Anspruch 11, 12 oder 13 verfügt, und
Betreiben eines vierten Verarbeitungsknotens, der über einen Knotenschutz gemäß Anspruch 11, 12 oder 13 verfügt,
wobei der dritte Verarbeitungsknoten an den ersten gemeinsamen Kanal gekoppelt ist, der vierte Verarbeitungsknoten an den zweiten gemeinsamen Kanal gekoppelt ist und der erste, zweite, dritte und vierte Verarbeitungsknoten kreuzgekoppelt sind, wobei der dritte Verarbeitungsknoten in der ersten Fehlereingrenzungsregion und der vierte Verarbeitungsknoten in der zweiten Fehlereingrenzungsregion liegt.

19. Verfahren gemäß einem der Ansprüche 15 - 18, wobei das System entweder A oder B ist:
| | |
|---|---|
| A | ein TTP-System, |
| B | ein FlexRay™-System. |

## Revendications

1. Dispositif destiné à connecter un noeud de traitement dans un système réparti contenant des noeuds de traitement à défaillance arbitraire, le dispositif comprenant :
des moyens de réception destinés à recevoir des signaux provenant d'un autre noeud de traitement du système, et
une garde de noeud couplée aux moyens de réception, la garde de noeud incluant des moyens de commutation destinés à recevoir une pluralité de signaux d'entrée unidirectionnels,
des moyens logiques couplés aux moyens de commutation et destinés à combiner la pluralité des signaux d'entrée reçus selon une fonction logique prédéterminée, et
des moyens de commande couplés aux moyens de commutation et destinés à commander l'application de la pluralité des signaux reçus aux moyens logiques afin de commander la réception de signaux au niveau de ceux-ci de manière à réduire la réception, par le noeud de traitement, d'une transmission non sécurisée provenant d'un autre noeud de traitement du système.

2. Dispositif selon la revendication 1, dans lequel la fonction logique prédéterminée comprend une fonction logique OU.

3. Dispositif selon la revendication 1 ou 2, dans lequel les moyens de commande sont disposés de manière à commander les moyens de commutation selon un ordonnancement prédéterminé TDMA.

4. Système réparti comprenant le dispositif selon la revendication 1, 2, ou 3.

5. Système selon la revendication 4, comprenant en outre au moins un noeud de traitement incluant une garde de bus.

6. Système selon la revendication 5, comprenant :
un premier noeud de traitement ayant une garde de noeud selon la revendication 1, 2, ou 3,
un deuxième noeud de traitement ayant une garde de noeud selon la revendication 1, 2, ou 3,
un premier groupe de noeuds de traitement incluant une garde de bus, et
un deuxième groupe de noeuds de traitement incluant une garde de bus,
dans lequel le premier groupe est couple aux premier et deuxième noeuds de traitement par l'intermédiaire d'un premier canal commun, et
le deuxième groupe est couple aux premier et deuxième noeuds de traitement par l'intermédiaire d'un deuxième canal commun,
le premier groupe et le premier noeud de traitement formant une première région de confinement d'erreur, et le deuxième groupe et le deuxième noeud de traitement formant une deuxième région de confinement d'erreur.

7. Système selon la revendication 6, le premier groupe étant en outre couplé aux premier et deuxième noeuds de traitement par l'intermédiaire d'un troisième canal commun, et le deuxième groupe étant en outre couplé aux premier et deuxième noeuds de traitement par l'intermédiaire d'un quatrième canal commun.

8. Système selon la revendication 5 ou 6, comprenant en outre :
un troisième noeud de traitement ayant une garde de noeud selon la revendication 1, 2, ou 3, et
un quatrième noeud de traitement ayant une garde de noeud selon la revendication 1, 2, ou 3,
dans lequel le troisième noeud de traitement est couplé au premier canal commun, le quatrième noeud de traitement est couplé au deuxième canal commun, et les premier, deuxième, troisième et quatrième noeuds de traitement sont couplés de manière croisée,
le troisième noeud de traitement étant dans la première région de confinement d'erreur, et le quatrième noeud de traitement étant dans la deuxième région de confinement d'erreur.

9. Système selon la revendication 4, comprenant une pluralité de noeuds de traitement incluant chacun une garde de noeud selon la revendication 1, 2 ou 3 et qui sont couplés par l'intermédiaire de trajets de transmission unidirectionnels, dans lequel il est affecté à chacun des noeuds de la pluralité de noeuds de traitement exclusivement l'un des trajets de transmission unidirectionnels en vue d'une transmission entre la pluralité de noeuds de traitement.

10. Système selon l'une quelconque des revendications 5 à 9, le système étant l'un ou l'autre de A etB:
A un système TTP/C
B un système FlexRay^{™}.

11. Procédé de mise en oeuvre d'un noeud de traitement dans un système réparti à défaillance arbitraire, le procédé comprenant :
la mise à disposition de moyens de réception destinés à recevoir des signaux provenant d'un autre noeud de traitement du système, et
la mise à disposition d'une garde de noeud couplée aux moyens de réception et destinés à recevoir une pluralité de signaux d'entrée unidirectionnels, la garde de noeud incluant :
des moyens logiques destinés à combiner la pluralité de signaux d'entrée reçus selon une fonction logique prédéterminée, et
des moyens de commande destinés à commander l'application de la pluralité de signaux reçus aux moyens logiques afin de commander la réception de signaux au niveau de ceux-ci de manière à réduire la réception, par le noeud de traitement, d'une transmission non sécurisée provenant d'un autre noeud de traitement du système.

12. Procédé selon la revendication 11, dans lequel la fonction logique prédéterminée comprend une fonction logique OU.

13. Procédé selon la revendication 11 ou 12, dans lequel les moyens de commande commandent les moyens de commutation selon un ordonnancement prédéterminé TDMA.

14. Procédé de mise en oeuvre d'un système réparti comprenant le procédé de mise en oeuvre d'un noeud de traitement selon la revendication 11, 12, ou 13.

15. Procédé selon la revendication 14, comprenant en outre la mise à disposition d'au moins un noeud de traitement incluant une garde de bus.

16. Procédé selon la revendication 15, comprenant :
la mise en oeuvre d'un premier noeud de traitement incluant unegarde de noeud selon la revendication 11, 12, ou 13,
la mise en oeuvre d'un deuxième noeud de traitement incluant des une garde de noeud selon la revendication 11, 12, ou 13,
la mise à disposition d'un premier groupe de noeuds de traitement incluant une garde de bus, et
la mise à disposition d'un deuxième groupe de noeuds de traitement incluant une garde de bus,
dans lequel le premier groupe est couplé aux premier et deuxième noeuds de traitement par l'intermédiaire d'un premier canal commun, et
le deuxième groupe est couplé aux premier et deuxième noeuds de traitement par l'intermédiaire d'un deuxième canal commun,
le premier groupe et le premier noeud de traitement formant une première région de confinement d'erreur, et le deuxième groupe et le deuxième noeud de traitement formant une deuxième région de confinement d'erreur.

17. Procédé selon la revendication 16, le premier groupe étant en outre couplé aux premier et deuxième noeuds de traitement par l'intermédiaire d'un troisième canal commun, et le deuxième groupe étant en outre couplé aux premier et deuxième noeuds de traitement par l'intermédiaire d'un quatrième canal commun.

18. Procédé selon la revendication 15 ou 16, comprenant en outre :
la mise en oeuvre d'un troisième noeud de traitement incluant unegarde de noeud selon la revendication 11, 12, ou 13, et
la mise en oeuvre d'un quatrième noeud de traitement incluant une garde de noeud selon la revendication 11, 12, ou 13,
dans lequel le troisième noeud de traitement est couplé au premier canal commun, le quatrième noeud de traitement est couplé au deuxième canal commun, et les premier, deuxième, troisième et quatrième noeuds de traitement sont couplés de manière croisée,
le troisième noeud de traitement étant dans la première région de confinement d'erreur et le quatrième noeud de traitement étant dans la deuxième région de confinement d'erreur.

19. Procédé selon l'une quelconque des revendications 15 à 18, dans lequel le système est l'un ou l'autre de A et B :
A un système TTP/C
B un système FlexRay^{™}.
